# EUROPEAN PATENT APPLICATION

(11) **EP 0 699 729 A1**
(43) Date of publication of application: **06.03.1996**
(21) Application number: 95305922.7
(22) Date of filing: 24.08.1995
(51) Int. Cl.: C09K 7/06

(54) **Non-hydrocarbon invert emulsions for use in well drilling operations wherein the external phase comprises poly(1,4-oxybutylene)glycol**

(30) Priority: 24.08.1994 US 295379
(71) Applicant: BAKER HUGHES INCORPORATED, Houston Texas 77027 (US)
(72) Inventor: DeBolt, Mario Alonso, Kingwood, Texas 77345 (US)
(74) Representative: Woodman, Derek

(57) **Abstract**

Invert emulsions are presented for use as well working fluids. The fluids have an external phase comprised of poly (1,4-oxybutylene) glycol and an aqueous internal phase. The separate phases are emulsified to create an emulsion and may be weighted with traditional weighting agents. The external phase is soluble or dispersible in sea water when diluted upon discharge.

## Description

### Field of the Invention:

This invention relates to well working fluids useful in drilling, completing or workover of oil and gas wells, and, specifically, to an invert emulsion type fluid having a non-hydrocarbon, non-mineral oil external phase and an aqueous internal phase which provides many of the advantages of an oil-based mud without the attendant adverse environmental effects. More particularly, this invention relates to an invert emulsion type fluid wherein the external or continuous phase comprises poly (1,4-oxybutylene) glycol.

### Description of the Prior Art:

During the drilling of oil and gas wells, drilling fluid is circulated through the interior of the drillstring and then back up to the surface through the annulus between the drillstring and the wall of the borehole. The drilling fluid serves various purposes including lubricating the drill bit and pipe, carrying cuttings from the bottom of the well borehole to the surface of the ground, and imposing a hydrostatic head on the formation being drilled to prevent the escape of oil, gas or water into the well borehole during the drilling operation.

Occasionally during drilling, the drillstring becomes stuck and cannot be raised, lowered or rotated. There are numerous causes for this problem, one of the most common being differential sticking. Differential sticking usually occurs when drilling permeable formations and borehole pressures are greater than formation pressures and when the drill pipe remains at rest against the wall of the borehole for enough time to allow mud filter cake to build up around the pipe. The pressure exerted by drilling fluid then holds the pipe against the cake wall.

For a number of years, oil-based fluids have been popular both as drilling fluids and as stuck pipe fluids. These fluids typically are comprised of a hydrocarbon oil or oils as the major component of the liquid phase to which various materials are added to impart the desired drilling fluid properties. These fluids are well adapted for use in underground formations containing water sensitive clays or shales which swell and disintegrate when contacted by water-based drilling fluids. Such fluids are substantially free of water, lose mostly oil as they filtrate and cause no swelling or disintegration of water sensitive clays and shales. One widely used oil based fluid is described in U.S. Patent No. 3,099,624, issued July 30, 1963 to Doyne L. Wilson. Water-in-oil emulsions are also used as drilling fluids. These fluids contain a high percentage of oil and a lesser percentage of water dispersed in the continuous or external phase of oil.

In order to free stuck pipe, prior art treatments involve the placement in and movement through the circulating mud system of a volume of a release agent, known as a spotting fluid, which is sufficient to fully contact the region of the borehole where the pipe is stuck. Thus, a suitably weighted oil-based fluid is circulated in the borehole to a position opposite the stuck interval. Over a period of time, the integrity of the mud filter cake between the drill pipe and borehole is reduced, allowing pressure equalization on all sides of the pipe. The invasion of oil into the filter cake is also thought to reduce the adhesive forces and lubricate the area between the pipe and borehole, resulting in less friction and quicker release.

Oil-based formulations used in the past as spotting fluids are described, for instance, in U.S. Patent Nos. 4,436,638 and 4,464,269. Water-based formulations are also known for use in releasing differentially stuck pipe. They are described for instance, in U.S. Patent Nos. 3,233,622; 4,230,587; 4,466,486; and 4,614,235.

Environmental regulations have recently either prohibited or severely limited the use of oil-based and invert emulsion oil muds as either drilling fluids or as spotting fluids. In many offshore areas, such as the Gulf of Mexico, the use of oil muds is strictly regulated. Restrictive regulations have thus created a need for a novel fluid which will fill the niche formerly occupied by oil muds, i.e., drilling fluids for active argillaceous formations, and spotting fluids used to release drill pipe held by differential pressure.

U.S. Patent Nos. 5,057,234 and 5,141,920, both of which are assigned to the assignee hereof and incorporated herein by reference, provide such a replacement fluid for an oil-base mud and have significant advantages over water based fluids when used in the above-mentioned well bore operations. These fluids are invert emulsions having a non-hydrocarbon, non-mineral oil external phase and an aqueous internal phase, all of which provides improved hole stability, bit lubrication, and minimization of hydration and dispersion of shale within the circulating fluid system.

These fluids perform the function of an oil based spotting fluid but do not leave a sheen upon receiving waters. Moreover, these fluids meet current environmental toxicity standards, thereby eliminating environmental problems caused by oil-based fluids.

The external phase disclosed in Patents 5,057,234 and 5,141,920 generally comprise glycols and more particularly are selected from the group consisting of polypropylene glycols, polypropylene glycol ethers and polypropylene oxide polymeric adducts of alcohols or mixtures of alcohols.

While the invert emulsion type fluid described in U.S. Patents 5,057,234 and 5,141,920 are well suited for their intended purposes, there is a continuing need for new and improved non-hydrocarbon fluids for use in invert emulsion type well working fluids.

### Summary of the Invention:

The above-discussed and other problems and deficiencies of the prior art are overcome or alleviated by the invert emulsion well bore fluid of the present invention which comprises a non-hydrocarbon, non-mineral oil external phase and an aqueous internal phase. Preferably, the invert emulsion of this invention has an external phase of poly (1,4-oxybutylene) and has a salt solution or water internal phase. The emulsion is formed by addition of water or a salt solution to the poly (1,4-oxybutylene) glycol external phase, which is partially soluble in the aqueous phase. An emulsifier and a viscosifier are added to form a stable emulsion and a weighting agent may be optionally added to form a weighted well bore fluid. The weighted well bore fluid is then circulated in the well.

The emulsion of this invention can be utilized as a spotting fluid for a stuck drillstring by incorporating the invert emulsion into a conventional drilling fluid and contacting the borehole zone contiguous to the stuck drillstring with the spotting fluid. This is accomplished by circulating the spotting fluid to the borehole zone contiguous to the stuck drillstring.

The above-discussed and other features and advantages of the present invention will be appreciated and understood by those skilled in the art from the following detailed description.

### Brief Description of the Drawing

The single FIGURE is a graph illustrating the biodegradability of the fluid additive of the present invention.

### Detailed Description of the Invention:

The novel well bore fluids of the invention are invert emulsions which have a non-hydrocarbon, non-mineral oil external or "continuous" phase and an aqueous internal phase. The term "emulsion" is commonly used to describe systems in which water is the external or continuous phase and, e.g., oil is dispersed within the external phase. By the term "invert" it is meant that the non-hydrocarbon, non-mineral oil substance is the continuous or external phase and that the aqueous fluid is the internal phase.

### The External Phase

In accordance with the present invention, the non-hydrocarbon, non-mineral oil external phase comprises poly (1,4-oxybutylene), which does not leave a sheen upon receiving waters, i.e., is water soluble or dispersible upon discharge at surface temperature and pressure conditions, as will be presently explained.

The poly (1,4-oxybutylene) glycol has a molecular weight ranging from about 500 to 900, most preferably about 600 to 700. The molecular weight of the poly (1,4-oxybutylene) glycol should be such that the material is soluble or dispersible in sea water at a salinity of about 3% and lower but which is substantially insoluble in a brine such as 20 to 23% (saturated) sodium chloride solution, whereby a stable emulsion can be formed without the selected material forming a homogeneous solution with the aqueous phase.

The preferred poly (1,4-oxybutylene) glycol is derived from the polymerization of tetrahydron furan (THF). THF is an organic solvent which is commercially available from (e.g., Fisher, Pittsburgh, PA) and can polymerize to form a low molecular weight polymer as follows: 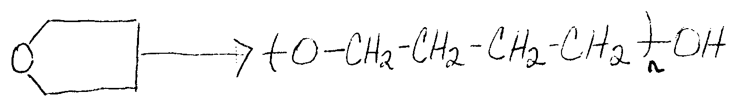
n may be in the range of 5 to 10 and preferably n equals 7. The resultant polymer is a non-hydrocarbon oily liquid which has a specific gravity in the range of 0.992 to 0.939, a viscosity in the range of 100 to 168 cps.

When used as the external phase of an invert emulsion, the poly (1,4-oxybutylene) glycol may be used by itself or in conjunction with other biodegradable glycol ethers such as polypropylene oxide polymeric adducts of alcohols or mixtures of alcohols, all of which are described in detail in aforementioned U.S. Patents 5,057,234 and 5,141,920.

Recent environmental regulations for offshore drilling fluids require that: (1) no "sheen" be left upon the receiving waters by the drilling fluid; and (2) that the drilling fluid meet stringent toxicity limits as measured by bioassays of Mysidopsis bahia shrimp. The Generic muds to be used with the Mysidopsis bioassays are described in T.W. Duke et al, "Acute Toxicity of Eight Laboratory Prepared Generic Drilling Fluids to Mysids", 1984, EPA 600, 3-84-067. The Mysid shrimp bioassay measure of toxicity, or LC50, is the lethal concentration to kill 50% of the Mysid shrimp population. Preferably, the lethal concentration of a 10% by volume candidate weighted external phase material in a generic mud, as measured by Mysidopsis bahia bioassay LC50 analysis, should be greater than about 30,000 parts per million for a suitable candidate material.

It is also necessary that the external phase not "leave a sheen on receiving waters" upon discharge. That is, the invert emulsion of this invention, when diluted with sea water upon discharge, is water soluble or dispersible and leaves no oil like sheen. Thus, the external phase material must be immiscible in brine at a salinity of about 3% or greater but is soluble or dispersible in sea water when salinity drops below about 3%.

### The Internal Phase

The brine used in forming the internal phase can be defined as an aqueous solution containing from about 100 to 350,000 parts per million metal ions such as lithium, sodium, potassium, magnesium, or calcium ions. The preferred brines used to form the internal phase of the emulsions of the invention contain from about 10 to about 23% (saturated) by weight sodium chloride and may contain various amounts of other dissolved salts such as sodium bicarbonate, sodium sulfate, sodium acetate, sodium borate, potassium chloride or calcium chloride.

The ratio of brine to external phase in the emulsions of the invention should generally provide as high a brine content as possible while still maintaining a stable emulsion since a high water content drilling fluid is less expensive and less objectionable to work with than a drilling fluid containing a low water content. External phase brine ratios in the range from about 82:18 to 55:45 have been found to work satisfactorily. Thus, the water content of a typical drilling fluid prepared according to the teachings of the invention will have an aqueous (water) content of about 5 to 50 volume percent, with the most preferred range being about 20 to 40 volume percent, most preferably about 30 volume percent of the drilling fluid.

### The Emulsifier

In order to form a stable emulsion, a surfactant or emulsifier is added to the external, the internal or both phases. The emulsifier can be any of a number of organic acids which are familiar to those skilled in the art, including the monocarboxyl alkanoic, alkenoic or alkynoic fatty acids containing from 2 to 22 carbon atoms, and mixtures thereof. Examples of this group of acids include acetic, stearic, oleic, caproic, capric, butyric, behenic, palmitic, arachidic, myristoleic, palmitoleic, elaidic, linoleic, linolenic, elaceostearic, and tarinic. Adipic acid, a member of the aliphatic dicarboxylic acids can also be used. The preferred surfactants or emulsifiers are fatty acid calcium salts, lecithin and lime. Lecithin is a mixture of the diglycerides of stearic, palmitic and oleic acids, linked to the chlorine ester of phosphoric acid. It is commercially available and is obtained from egg-yolk and soya beans.

### Viscosifiers

Viscosifiers can also be added to improve the solids suspending ability of the well bore fluid. Suitable viscosifiers include the commercially available organophilic clays, bentonites, attapulgite clays, sepiolite, guar, carboxymethyl guar, hydroxypropyl guars, fumed silicas, fumed alumina and the like. Preferred viscosifers include sepiolite, organophilic clay and treated fumed silica.

### Weighting Agents

Weighting materials can also be used to weight the well bore fluids of the invention to a density in the range from about 8.33 pounds per gallon to 15 pounds per gallon and greater. Weighting materials which are known in the art include barite, ilmenite, calcium carbonate, iron oxide and lead sulfide. The preferred weighting material is commercially available barite.

Three exemplary formulations follow which may produce weightable, stable emulsions. These formulations are based on three different suspending agents sepiolite, organophillic clay and treated fumed silica. The method of forming these three types of glycol emulsions can be briefly described as follows:

### (1) Sepiolite Formulation

Salt water (20% aqueous sodium chloride) is viscosified by mixing sepiolite with the salt water in a blender. The brine/sepiolite slurry is added to a blend of crude tall oil fatty acid, lecithin (CLEARATE b-60 from W.A. CLEARLY CORP.) and lime. The combined mixture is blended vigorously to produce an invert emulsion. Preferably, the emulsion is prepared using a high external phase to-brine ratio such as 82:18. The external phase ratio may be reduced to 55:45 by the addition of 20% (aq) sodium chloride.

### (2) Organophilic Clay Formulation

A mixture of poly (1, 4 - oxybutylene) glycol, crude tall oil fatty acid, lecithin (CLEARATE b-60 from W.A. CLEARLY CORP.) and lime is mixed for several minutes in a blender. Organophilic clay is added and the mixture is blended at high shear for ten minutes. Salt water is then added during high shear to produce the emulsion. Barite must be added immediately to maintain the emulsion.

### (3) Treated Fumed Silica Formulation

Molecular weight around 600, is viscosified with a treated fumed silica (CAB-O-SIL TS - 610 form CABOT CORP.). A typical formulation includes crude tall oil fatty acid, lime and 20% (aq) sodium chloride. Poly (1, 4-oxybutylene) glycol brine ratios range from 60/40 to 80/20. Preparation requires moderate shear, and emulsions are stable without barite.

The following examples are intended to be illustrative of the invention without being limiting.

### Examples

### Example 1

### Materials and Equipment

Poly (1, 4 - oxybutylene) (also known as poly (tetrahydrofuran)) was obtained from QO chemical as Polymeg 650. CARBO-TEC® is an organophyllic clay. CARBO-TROL® is a filtration control agent. CARBO-GEL® is an organophilic hectorite viscosifier for suspension of solids in muds. CARBO-TEC®, CARBO-TROL® and CARBO-GEL® are all available from Baker Hughes Inteq. Butyl dipropasol solvent was obtained from Arco Chemical Company. A Multimixer was used to shear the drilling mud. Rheological properties were measured in a 35 Fann viscometer at room temperature and at 150°F.

### Clay Evaluation

To evaluate the ability of the drilling mud to stabilize shale, volclay pellets were used as follows: a water solution containing the oligomer was prepared and placed in a beaker. Then, two volclay pellets were placed in the beaker and the solution allowed to stand at room temperature for several hours (2-4) then observation were recorded.

### Results

Table 1 summarizes the evaluation of poly(tetrahydrofuran) as a fluid. An inverted emulsion can be made with this oligomer. The inverted emulsion prepared was stable. The electrical stability was 18 volts. The rheological properties are good at room temperature, but at elevated temperatures (150°F) the values are reduced considerably. It is also possible to use this oligomer in a solvent such as butyl dipropasol which in effect reduces the viscosity and it may help stabalize the rheological properties.

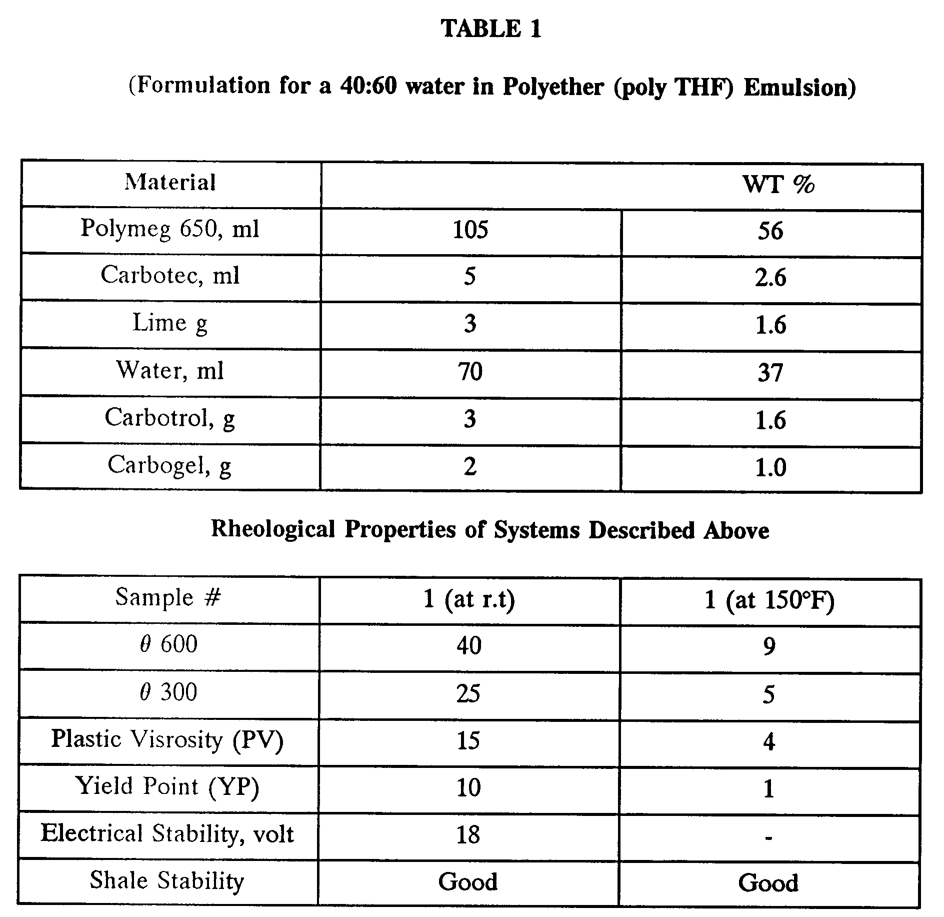

### Example 2

While Example 1 shows favorable results of the present invention in fresh water, Example 2 is intended to show similarly favorable results when poly (THF) is used in an invert emulsion in a brine (e.g., sea or salt water).

### Materials and Equipment

A mud with the following composition was prepared:
- Polymeg 650: 105 grams
- 20% NaCL solution in water: 140 ml
- Carbo-Tec: 5 ml
- Lime: 3 grams
- Carbotrol: 3 grams
- Carbogel: 2 grams

The sample was blended for 1/2 hour with a multimixer and then 25 grams of HOLE-PLUG were added (HOLE-PLUG is a simulated shale used for shale stability studies) and the mud was placed inside a glass pint jar. The sample was then hot rolled in an oven at 150° F for 16 hours. After this time, the mud was allowed to cool to room temperature and filtered through an 18 mesh screen. The undisturbed shale was washed with water several times and dried in an oven at 225° F for 4 hours. The % erosion was calculated assuming an 8% moisture on the original shale. The properties of the mud were measured.

### Results

The properties of the mud are as follows:
- Plastic Viscosity,: 12
- Yield Point,: 2
- 10-S gels,: 6
- 10-Minute gels,: 9
- % Erosion loss: 9

The above properties indicate that the invert emulsion of the present invention provides stable rheological properties in salt water environments.

### Biodegradability

The biodegradability of the reaction product of the above Example was tested using the 28 day "Closed Bottle Method". This method is accepted by the Organization of Economic Corporation and Development (OECD) and all testing was conducted in accordance with Good Laboratory Practice. In the 28 day Closed Bottle Method, nutrient enriched natural sea water is used as the dilution water. Micro-organisms that are already present in the sea water are used as the inoculum. One concentration of the test material is added to the nutrient enriched sea water and the dissolved oxygen is measured at 0, 5, 15 and 28 days. A reference material, sodium benzoate is also tested using the same parameters as the test material. The sea water collected for these experiments is described in Table 2.

The sample was analyzed and this material was determined to be insoluble, therefore a micropipetor was used to inoculate each test bottle. After 28 days, 2µl/l of Example 1 degraded 84.63% and 2 mg/l of sodium benzoate degraded 86.08% under the same conditions.

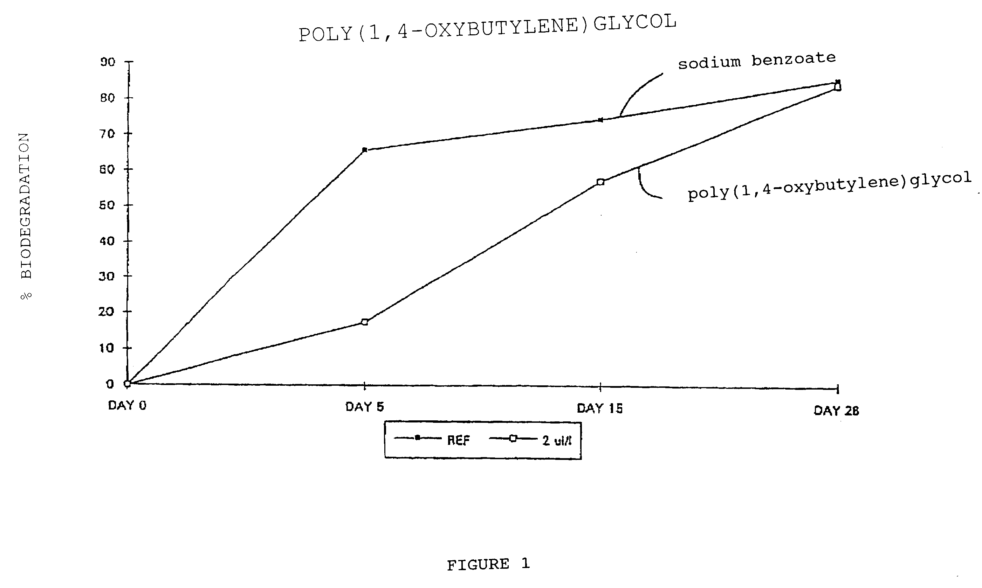

Tables 3 and 4 show the statistical analysis of the dissolved oxygen data. FIGURE 1 illustrates the biodegradation of Example 1 over time. These tests demonstrate that the drilling fluid additive of this invention exhibits excellent biodegradability characteristics.

**TABLE 2**

| Collection site | National Marine Fisheries Services Galveston, TX |
|---|---|
| Depth | approx. 6 feet |
| Appearance | Clear with slight green tinge |
| Salinity, 0/00 | 22 |
| Temperature, °C | 22 |
| Dissolved Oxygen, mg/l | 7.25 |
| pH | 8.3 |
| Total organic carbon | 1 mgl; 060893 |
| Microbial count | 9,200 |
| NO₃, ppm | 0 |
| PO₄, ppm | 0 |
| NH₄, ppm | 0 |
| Time between collection and use | 48 hrs. |

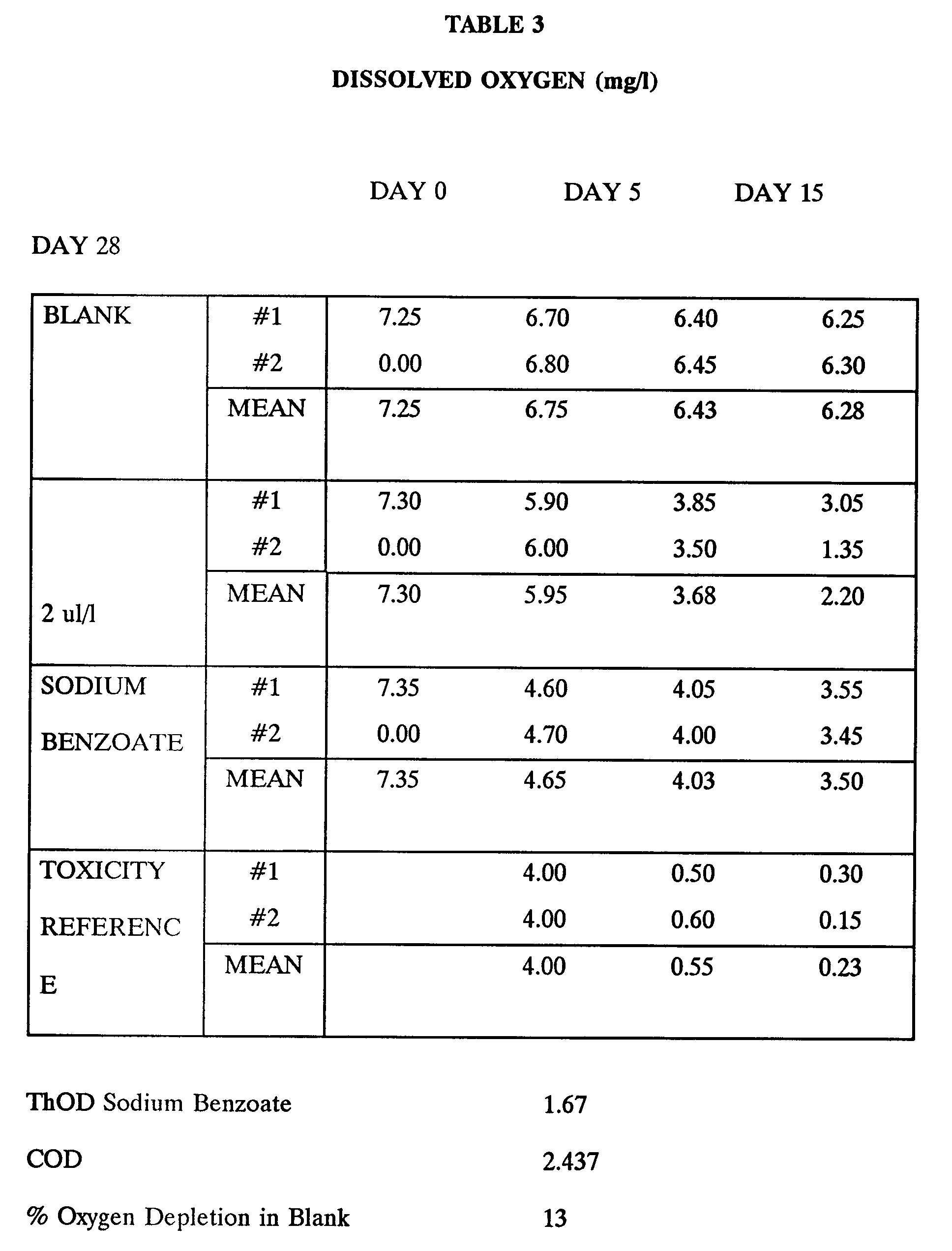

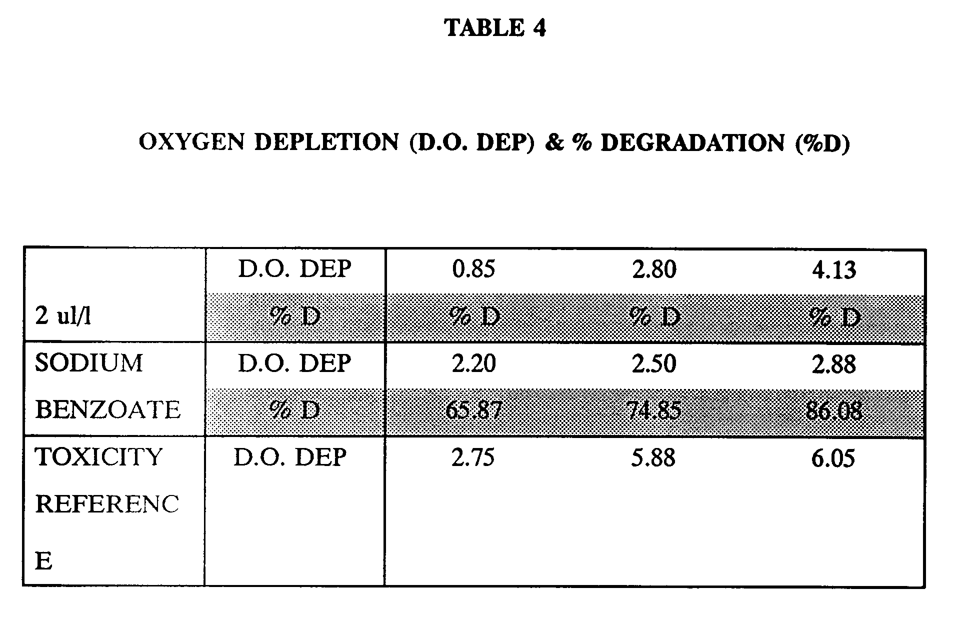

The stable invert emulsion drilling fluid of the invention may be used in a process for drilling or completing a well where the emulsion drilling fluid is circulated down through the interior of the drill pipe and then back up to the surface through the annulus between the drill pipe and the wall of the borehole.

Alternatively, the invert emulsions of the invention may be used as spotting fluids. By this technique, a weighting material is mixed with the emulsion to produce a weighted spotting fluid. The weighted spotting fluid is then circulated downhole so as to position it to contact the drillstring in the area adjacent the stuck zone. Such fluid is effective as a spotting fluid which can be positioned in the borehole by techniques well known in the art.

An invention has been provided with significant advantages. When used as a drilling fluid invert emulsions of water in-poly (1,4-oxybutylene) glycol will have significant advantages over water-based drilling fluids. The novel emulsions will provide improved hole stability, and bit lubrication, and will minimize hydration and dispersion of shale within the mud system. As spotting fluids these emulsions will perform the same function as that provided by oil-based spotting fluids, but without the environmental problems of oil-based fluids.

While preferred embodiments have been shown and described, various modifications and substitutions may be made thereto without departing from the spirit and scope of the invention. Accordingly, it is to be understood that the present invention has been described by way of illustrations and not limitation.

## Claims

1. A method of drilling a well which includes the steps of:
(a) forming a mud having an external phase and an aqueous internal phase, said external phase and said internal phase being immiscible, the external phase comprising a poly(1,4-oxybutylene)glycol;
(b) adding an emulsifier to convert said mud into an invert emulsion; and
(c) circulating said well bore fluid in said well.

2. A method according to claim 1, wherein the external phase further comprises a glycol which is compatible with the poly(1,4-oxybutylene)glycol.

3. A method according to claim 2, wherein said glycol is selected from the group consisting of polypropylene glycol, polypropylene glycol ethers and propylene oxide polymeric adducts of alcohols or mixtures of alcohols.

4. A method according to claim 2 or 3, wherein said glycol has a molecular weight between about 250 and 1000.

5. A method according to any one of claims 1 to 4 further comprising the step of:
adding a weighting agent to said emulsion to form a weighted well bore fluid.

6. A well bore fluid for use in drilling a borehole of an underground formation comprising an invert emulsion of an external phase comprising a poly(1,4-oxybutylene)glycol and an aqueous internal phase, together with an emulsifier.

7. A well bore fluid according to claim 6, wherein the external phase further comprises a glycol which is compatible with the poly(1,4-oxybutylene)glycol.

8. A well bore fluid according to claim 7, wherein said glycol is selected from the group consisting of polypropylene glycol, polypropylene glycol ethers and propylene oxide polymeric adducts of alcohols or mixtures of alcohols.

9. A well bore fluid according to any of claims 6 to 8, wherein the emulsifier is selected from the group consisting of lime, lecithin, fatty acids and fatty acid mixtures.

10. A well bore fluid according to any one of claims 6 to 9 further comprising a weighting agent.

11. A well bore fluid according to claim 10, wherein the weighting agent is barite.

12. A well bore fluid according to any one of claims 6 to 11, further comprising a viscosifier.

13. A well bore fluid according to claim 12 wherein said viscosifier is selected from the group consisting of sepiolite and attapulgite.

14. Use of a well bore fluid according to claim 6 as a drilling fluid or a spotting fluid.
